# EUROPEAN PATENT SPECIFICATION

(11) **EP 3 833 495 B1**
(45) Date of publication and mention of the grant of the patent: **15.10.2025**
(21) Application number: 19762219.4
(22) Date of filing: 01.08.2019
(51) Int. Cl.: B09B 3/00, B09B 5/00, B22F 9/00, C22B 11/02

(54) **PROCESS FOR TREATMENT ISOLATION AND SEPARATION OF FERROMAGNETIC COMPOUNDS CONTAINED IN WASTE OF ELECTRICAL AND ELECTRONIC EQUIPMENTS**
VERFAHREN ZUR BEHANDLUNG ISOLIERUNG UND ABTRENNUNG VON FERROMAGNETISCHEN SUBSTANZEN ENTHALTEN IN ELEKTRISCHEN ODER ELEKTRONISCHEN ABFÄLLEN
PROCÉDÉ DE TRAITEMENT D'ISOLATION ET DE SÉPARATION DE COMPOSÉ FERROMAGNÉTIQUE CONTENU DANS LES DÉCHETS D'ÉQUIPEMENT ÉLECTRIQUES OU ÉLECTRONIQUES

(30) Priority: 10.08.2018 IT 201800008043
(43) Date of publication of application: 16.06.2021
(73) Proprietor: Politecnico Di Torino, 10129 Torino (IT); Arcobaleno Cooperativa Sociale, 10148 Torino (IT)
(72) Inventor: LAVIANO, Francesco, 73014 Gallipoli (LE) (IT); PASSARELLI, Fabio, 13040 Alice Castello (VC) (IT)
(74) Representative: Metroconsult Srl
(86) International application number: PCT/IB2019/056560
(87) International publication number: WO 2020/031032

(56) References cited:
- GB-A- 2 300 827
- US-A1- 2012 137 829
- ZAKOTNIK ET AL: "Possible methods of recycling NdFeB-type sintered magnets using the HD/degassing process", JOURNAL OF ALLOYS AND COMPOUNDS, ELSEVIER SEQUOIA, LAUSANNE, CH, vol. 450, no. 1-2, 24 December 2007 (2007-12-24), pages 525 - 531, XP022400931, ISSN: 0925-8388

## Description

### Technical Field

The present invention relates to a process for treatment, isolation and separation of valuable ferromagnetic compounds contained in wastes of electrical and electronic equipments (also referred to as WEEEs, as used hereinafter).

In particular, the present invention relates to a process for treatment, isolation and separation of valuable ferromagnetic compounds contained in WEEEs with zero environmental impact.

### Background Art

### Shortcomings of the Prior Art

The processes currently in use for recovering and recycling compounds of high economical value contained in WEEEs, such as, for example, precious heavy metals (e.g. gold, platinum, rhodium, palladium, indium, neodymium, dysprosium, and the like) and valuable ferromagnetic compounds (e.g. those based on NdFeB and SmCo) are based on, among other things, high-temperature combustion for treatment and isolation, and washing with strong bases and/or acids, generally the inorganic ones, for separation. The environmental impact is, of course, considerable during all steps of such processes, e.g. due to formation and emission of dioxins during the combustion of plastic materials, and of chlorine and sulphur dioxide during the solubilization with strong acids. Also the use of large amounts of strong bases and acids during the subsequent separation steps leads to non-negligible problems in terms of environmental pollution.

Treatments with organic acids have been recently proposed (e.g. oxalic acid: see T. Vander Hoogerstraete, B. Blanpain, T. Van Gerven, K. Binnemans, RSC Advances 4, 64099-64111 (2014)), which decrease the impact of fumes and waste of the acid treatment. However, oxalic acid is *per se* toxic for human and animal organisms; therefore, the solutions that have been proposed so far to overcome the above-mentioned problems are still unsatisfactory.

US 2012/137829 A1 discloses a method for recovering rare earth particulate material from an assembly comprising a rare earth magnet and comprises the steps of exposing the assembly to hydrogen gas to effect hydrogen decrepitation of the rare earth magnet to produce a rare earth particulate material and separating the rare earth particulate material from the rest of the assembly. The invention also resides in an apparatus for separating rare earth particulate material from an assembly comprising a rare earth magnet. The apparatus comprises a reaction vessel having an opening which can be closed to form a gas-tight seal, a separation means for separating the rare earth particulate material from the assembly, and a collection means for collecting the rare earth particulate material. The reaction vessel is connected to a vacuum pump and a gas control system, and the gas control system controls the supply of hydrogen gas to the reaction vessel.

GB 2300827 A discloses a method for the preparation of waste from printed circuit boards. After removal of hazardous materials, the printed circuit boards are mechanically initially comminuted, the particles are cryogenically embrittled by means of liquid nitrogen and are comminuted in a hammer mill. The cryogenically embrittled particles are selectively comminuted in batches, the material to be milled being separated into a fine fraction, which emerges through a filter base in the mill chamber, and into a coarser, metallic coarse fraction, which can be removed in batches and from which iron parts can subsequently be separated magnetically. The fine fraction is sorted into a plurality of narrowband size classes having a grain size bandwidth of about 1:1.6 per size class, each individual size class of the particles being separated by material into other material particles and metal particles separately by means of corona roller separators, it being possible to separate the metal particles by material into different metal classes.

The document in the name of Zakotnik et al. entitled "Possible methods of recycling NdFeB-type sintered magnets using the HD/degassing process", Journal of Alloys and Compounds, Elsevier Sequoia, Lausanne, CH, vol. 450, no. 1-2, 24 December 2007, pages 525-531, XP022400931, describes that hydrogen could play a vital role in the process of recycling NdFeB-type magnets. Fully dense sintered NdFeB-type magnets have been subjected to the hydrogen decrepitation (HD) process. The resultant powder has been subsequently processed in one of two ways to produce permanent magnets. Firstly, the powder was subjected to a vacuum degassing treatment over a range of temperatures up to 1000 °C to produce powder that would be suitable for the production of anisotropic bonded or hot-pressed magnets. Secondly, the HD-powder has been used to produce fully dense sintered magnets; in which case optimization of the milling time, sintering temperature and time was carried out.

### Technical problem:

In particular, there is still a great demand in this field from the technicians for a reliable, easy-to-implement, low-cost and environment-friendly industrial process for recovering valuable ferromagnetic compounds contained in WEEEs.

In particular, a need is still felt for the availability of a satisfactory process for recovering valuable ferromagnetic compounds contained in ever increasing amounts in electrical and electronic equipments, a large part of which has a considerable economical value due to the presence, for example, of rare-earth elements and/or precious metals, as in high energy density magnets; said process should ideally comprise a number of steps or phases having, wherever possible, zero impact on the environment and on the operators, without any substantial emission of chemical fumes and wastes, preferably at relatively low temperatures (possibly lower than the melting temperatures of the metals), and with acceptable overall production costs.

It is the object of the present invention to provide an adequate solution to the above-described technical problem.

### Summary Description of the Invention

The present inventors have now found that it is possible to provide an adequate solution to the above-described technical problem through the use of a process with zero environmental impact which uses electric energy, air and water only, the last two being both regenerated to the initial condition during the process cycle.

It is therefore one object of the present invention to provide an industrial process for recovering valuable ferromagnetic compounds contained in WEEEs, as set out in the appended independent claim.

Preferred embodiments of the present invention are set out in the appended dependent claims.

The preferred embodiments of the present invention illustrated in the following description only have an explanatory purpose and are by no means intended to limit the application scope of the present invention, which will be immediately apparent to those skilled in the art.

### Description of the Drawings

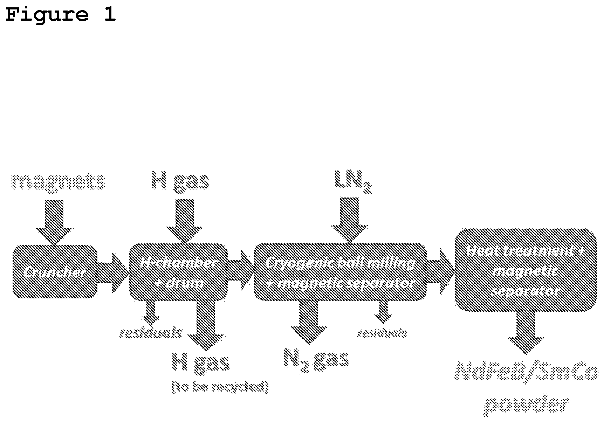

**Figure 1** illustrates, in a block diagram, a preferred embodiment of the process of the present invention, wherein, in a first step, the ferromagnetic elements (designated as *magnets*), selected either manually or by semi-automatic processes, are inserted into a first crunching device (designated herein as *cruncher*), which effects a rough fracturing thereof (particularly useful for delaminating the coating layer, if present, generally consisting of a Ni alloy). The next step is carried out in a hydrogenation reactor (designated herein as *H-chamber*), in which decrepitation occurs by hydrogenation, along with further breaking (designated herein as *drum*), resulting in definitive separation of the coating. The hydrogen supplied to the hydrogenation reactor (designated herein as *H gas*) is preferably produced by hydrolysis of deionized water by means of a proton exchange membrane generator working at ambient pressure and temperature (not shown in the drawing). The hydrogen gas that has not reacted with the ferromagnetic compounds (designated herein as *H gas (to be recycled)*) is recovered for the next cycle. The particulate of ex-ferromagnetic hydrides thus obtained is then fed into a ball milling machine (designated herein as *cryogenic ball milling*) working at cryogenic temperature (obtained by supplying liquid nitrogen, designated herein as *LN₂*). Within said milling machine, a first magnetic separator (designated herein as *magnetic separator*) traps any ferromagnetic coatings and/or residues that have not reacted with hydrogen. In a next device, the ex-ferromagnetic hydrides are subjected to a selective thermal treatment called degassing (designated herein as *heat treatment*), which allows restoring the magnetic properties of the hydrogenated compounds. A simultaneous magnetic separation, carried out selectively by means of a second magnetic separator (designated herein as *magnetic separator*) contained within this device, as a function of the applied temperature, selects/classifies the desired ferromagnetic compounds based on the specific Curie temperatures thereof. Finally, the ferromagnetic powders (generally designated herein as *NdFeB*/*SmCo powder*) are individually released from the plant and collected into suitable sealed containers (not shown in the drawing).

### Detailed Description of the Invention

The present invention relates to an industrial process for treatment, isolation and separation of valuable ferromagnetic compounds contained in wastes of electrical and electronic equipments (WEEEs), wherein said process comprises at least the following steps:
a) treating said WEEEs, possibly after a suitable pre-selection, with hydrogen gas until a magnetically inert particulate is obtained, through decrepitation of said valuable ferromagnetic compounds of said WEEEs, along with other residues consisting of protective metal coatings (e.g. nickel foils) and any other ferrous parts (e.g. supports, screws, and so on);
b) isolating said residues, consisting of the protective metal coating and any other ferrous parts, from said particulate, magnetically inertized by the hydrogenation process of step a), by applying a first magnetostatic field;
c) reducing the mean size of said magnetically inertized particulate to a desired optimal size, by cryogenic milling;
d) subjecting the powder obtained from step c) to a thermal treatment, in a so-called degassing process, until the original magnetic characteristics of the initial ferromagnetic compounds are restored;
e) applying, during step d), a second magnetostatic field which selectively separates the ferromagnetic compounds according to their different Curie temperatures.

In said process of the present invention, said valuable ferromagnetic compounds contained in WEEEs are selected both from the group consisting of transition metal compounds, such as, for example, ferrites, and from the group consisting of rare-earth compounds, such as, for example, those based on NdFeB, SmCo.

Optionally, and preferably, said step a) of said process is preceded, as anticipated, by an initial step of pre-selecting the components that contain ferromagnetic materials; this pre-selection can be carried out either manually or mechanically, e.g. in a semi-automatic or automatic manner, and is primarily intended for making an initial rough selection to eliminate those components which are clearly not ferromagnetic (such as, for example, rubber, plastic, wooden, cardboard, etc. materials/coatings), while at the same time selecting/preserving, for example, components selected from the group of electric motors, electromagnetic actuators, sensors, permanent magnets, electromagnets, and so on.

Subsequently, in said step a) said pre-selected ferromagnetic components are directed to a first stage of a treatment system, e.g. consisting of a suitable insulated chamber or container, into which hydrogen gas is made to flow; preferably, the temperature in said first stage is approximately equal to ambient temperature, e.g. in the range of 20 to 50°C, more preferably 20 to 40°C, 20 to 30°C on average; on its turn, the pressure value is preferably equal to or slightly higher than ambient pressure; hydrogen gas is preferably pure hydrogen, more preferably generated by hydrolysis of deionized water through methods well known in the literature and commonly used in the industry by those skilled in the art (which methods will not therefore be described any further herein).

Hydrogenation goes on until decrepitation of the ferromagnetic compounds is obtained (as described, for example, in M. Zakotnik, I.R. Harris, A.J. Williams, Journal of Alloys and Compounds 450 (2008) 525-531), resulting in such compounds being reduced to a magnetically inert particulate of sub-millimeter size, preferably in the range of 1 micron to 2,000 microns; more preferably, 5 microns to 500 microns; even more preferably, 10 to 200 microns; and a number of other metallic residues (e.g. nickel chips), as previously described.

In said step b) of the process of the present invention, the separation of the residual metallic materials from the magnetically inert particulate obtained from step a) is effected, for example, by means of a magnetostatic field, e.g. generated by a wall made of ferromagnetic material facing a device employed for transporting the magnetically inert particulate to a next stage. As an alternative, the transport device may be made of a ferromagnetic or magnetizable material, thus retaining the metallic material residues and letting the magnetically inert particulate proceed to the next stage; said transport device may be, for example, a conveyor belt, whether magnetizable or not; however, particulate transport may also be effected through other known means of transport commonly used in the industry, e.g. the so-called load-lock transport methods, or by gravity.

In said step c) of the process of the present invention, cryogenic milling is preferably carried out in a suitable cryostat with liquid nitrogen cooling (i.e. operating at -196°C), and equipped with a dry ball milling unit; wherein said optimal size of said particulate is preferably in the range of 50 to 1,000 nm; more preferably, 100 to 500 nm; even more preferably, 200 to 300 nm.

In said degassing step d) of the process of the present invention, said thermal treatment of the powder still magnetically inert obtained from step c) is preferably carried out in a suitable stage, container (e.g. a tubular furnace), under vacuum; preferably, at a pressure ≤ 1 mbar; more preferably, less than 1 mbar; and at a variable temperature according to the type of valuable ferromagnetic material to be recovered; on average, at a temperature ≥ 700 °C; more preferably ≥ 800 °C; possibly also at higher temperatures, depending on specific requirements and on the compound to be recovered. Also the duration of said step d) may vary according to the type of valuable ferromagnetic compound to be recovered and on the thermal treatment time necessary for restoring its magnetic characteristics.

Simultaneously with the thermal treatment step d), step e) is also carried out as previously described, wherein said second magnetostatic field is preferably applied through a magnetic septum sweeping the thermal treatment chamber during a controlled cooling phase, so as to selectively pick up and remove the powders that re-acquire their spontaneous magnetization due to their ferromagnetic transition below their specific Curie temperature (e.g. approx. 300°C for NdFeB and approx. 800°C for SmCo). In this way, by exploiting the different Curie temperatures that are characteristic of each compound, it has been possible to selectively recover and separate the different valuable ferromagnetic compound of interest with a degree of purity at least higher than 90%. After the above-described separation, the powders of valuable ferromagnetic compounds, separated with a degree of purity at least higher than 90% by weight, will be sealed into suitable containers, e.g. containers made of a suitable plastic or glass, for storage or for immediate reuse.

As can be easily inferred from the above description, the treatment and separation process as described in the present description and claimed in the appended claims has proven to be particularly effective as well as ecologically compatible, and in particular, it actually has zero impact on the environment (no highly polluting substances are used) and on the operators (no harmful substances for health are used).

### Advantages of the Invention and Industrial Applicability

The use of the process of the present invention having zero environmental impact for the complete recycling of valuable ferromagnetic compounds contained in WEEEs, also thank to the milling at cryogenic temperatures carried out in order to obtain the optimal size of the hydrogenated powder of ferromagnetic material, the subsequent thermal treatment carried out at relatively low temperatures, and the selective separation of said ferromagnetic compounds, and has proven to be particularly suitable for the profitable recovery of rare-earth ferromagnetic compounds from special wastes of WEEEs and the reuse thereof for manufacturing, for example, new permanent magnets (whether bonded or sintered).

## Claims

1. An industrial process for treatment, isolation and separation of valuable ferromagnetic compounds contained in waste electrical and electronic equipment (WEEE), wherein said process comprises at least the following steps:
a) treating said WEEE with hydrogen gas until a magnetically inert particulate is obtained, through decrepitation of said valuable ferromagnetic compounds of said WEEE;
b) isolating said particulate, magnetically inertized by the hydrogenation process of step a), from the other residues consisting of the protective metal coating and any other ferrous parts, by applying a first magnetostatic field;
c) reducing the mean size of said magnetically inertized particulate to a powder having a desired optimal size, by cryogenic milling;
d) subjecting the powder obtained from step c) to a thermal treatment until the original magnetic characteristics of the initial ferromagnetic compounds are restored;
e) applying, during step d), a second magnetostatic field which selectively separates the ferromagnetic compounds according to their different Curie temperatures.

2. The process according to claim 1, wherein said valuable ferromagnetic compounds contained in WEEE are selected from the group consisting of transition metal compounds, such as ferrites, and/or from the group consisting of rare-earth compounds, such as those based on NdFeB, SmCo.

3. The process according to claim 1 or 2, wherein in said step a) hydrogenation is carried out at a temperature from 20 to 50°C and at a pressure equal to or higher than ambient pressure; and wherein said obtained magnetically inert particulate has a size in the range of 1 micron to 2,000 microns.

4. The process according to any one of the preceding claims, wherein in said step c) cryogenic milling is carried out at -196°C, and wherein the size of the obtained particulate is 50-1,000 nm.

5. The process according to any one of the preceding claims, wherein in said degassing step d) the thermal treatment of the magnetically inert powder obtained from step c) is carried out under a vacuum, at a pressure ≤ 1 mbar and at a temperature ≥ 700 °C.

6. The process according to any one of the preceding claims, wherein said step a) is preceded by a step of pre-selecting the components containing ferromagnetic materials; such pre-selection being carried out either manually or mechanically to accomplish the removal of the components that are not ferromagnetic.

7. The process according to any one of the preceding claims, wherein the powders of valuable ferromagnetic compounds separated during step e), having a degree of purity at least greater than 90% by weight, are sealed into containers for storage or for immediate reuse.

## Patentansprüche

1. Industrielles Verfahren zur Behandlung, Isolierung und Trennung von wertvollen ferromagnetischen Verbindungen, die in Elektro- und Elektronik-Altgeräten (WEEE) enthalten sind, wobei das Verfahren mindestens die folgenden Schritte umfasst:
a) Behandeln der WEEE mit Wasserstoffgas, bis durch Zersetzung der wertvollen ferromagnetischen Verbindungen der WEEE magnetisch inerte Partikel erhalten werden;
b) Isolieren der durch den Hydrierungsprozess in Schritt a) magnetisch inertisierten Partikel von den anderen Rückständen, die aus der schützenden Metallbeschichtung und anderen eisenhaltigen Teilen bestehen, durch Anlegen eines ersten magnetostatischen Feldes;
c) Verringern der mittleren Größe der magnetisch inertisierten Partikel durch kryogenes Mahlen auf ein Pulver mit einer gewünschten optimalen Größe;
d) Unterziehen des in Schritt c) erhaltenen Pulvers einer thermischen Behandlung, bis die ursprünglichen magnetischen Eigenschaften der ursprünglichen ferromagnetischen Verbindungen wiederhergestellt sind;
e) Anlegen eines zweiten magnetostatischen Feldes während Schritt d), das die ferromagnetischen Verbindungen entsprechend ihren unterschiedlichen Curie-Temperaturen selektiv trennt.

2. Verfahren nach Anspruch 1, wobei die in WEEE enthaltenen wertvollen ferromagnetischen Verbindungen ausgewählt sind aus der Gruppe bestehend aus Übergangsmetallverbindungen, wie Ferrite, und/oder aus der Gruppe bestehend aus Seltenerdverbindungen, wie solchen auf Basis von NdFeB, SmCo.

3. Verfahren nach Anspruch 1 oder 2, wobei in Schritt a) die Hydrierung bei einer Temperatur von 20 bis 50 °C und bei einem Druck durchgeführt wird, der gleich oder höher als der Umgebungsdruck ist; und wobei die erhaltenen magnetisch inerten Partikel eine Größe im Bereich von 1 Mikrometer bis 2.000 Mikrometer aufweisen.

4. Verfahren nach einem der vorstehenden Ansprüche, wobei in Schritt c) das kryogene Mahlen bei -196 °C durchgeführt wird und wobei die Größe der erhaltenen Partikel 50 bis 1000 nm beträgt.

5. Verfahren nach einem der vorstehenden Ansprüche, wobei in dem Entgasungsschritt d) die thermische Behandlung des aus Schritt c) erhaltenen magnetisch inerten Pulvers unter Vakuum, bei einem Druck ≤ 1 mbar und bei einer Temperatur ≥ 700 °C durchgeführt wird.

6. Verfahren nach einem der vorstehenden Ansprüche, wobei dem Schritt a) ein Schritt zum Vorauswählen der ferromagnetische Materialien enthaltenden Komponenten vorausgeht, wobei diese Vorauswahl entweder manuell oder mechanisch durchgeführt wird, um die Entfernung der nicht ferromagnetischen Komponenten zu bewirken.

7. Verfahren nach einem der vorstehenden Ansprüche, wobei die in Schritt e) abgetrennten Pulver aus wertvollen ferromagnetischen Verbindungen, die einen Reinheitsgrad von mindestens 90 Gew.-% aufweisen, zur Lagerung oder zur sofortigen Wiederverwendung in Behälter verschlossen werden.

## Revendications

1. - Procédé industriel pour le traitement, l'isolation et la séparation de composés ferromagnétiques de valeur contenus dans les déchets d'équipements électriques et électroniques (DEEE), dans lequel ledit procédé comprend au moins les étapes suivantes :
a) traiter lesdits DEEE par de l'hydrogène gazeux jusqu'à l'obtention de particules magnétiquement inertes, par décrépitation desdits composés ferromagnétiques de valeur desdits DEEE ;
b) isoler lesdites particules, magnétiquement inertisées par le processus d'hydrogénation de l'étape a), par rapport aux autres résidus consistant en le revêtement métallique protecteur et toutes autres parties ferreuses, par application d'un premier champ magnétostatique ;
c) réduire la taille moyenne desdites particules magnétiquement inertisées en une poudre ayant une taille optimale souhaitée, par broyage cryogénique ;
d) soumettre la poudre obtenue à l'étape c) à un traitement thermique jusqu'à ce que les caractéristiques magnétiques d'origine des composés ferromagnétiques initiaux soient rétablies ;
e) appliquer, au cours de l'étape d), un second champ magnétostatique qui sépare sélectivement les composés ferromagnétiques conformément à leurs différentes températures de Curie.

2. - Procédé selon la revendication 1, dans lequel lesdits composés ferromagnétiques de valeur contenus dans les DEEE sont choisis dans le groupe consistant en les composés des métaux de transition, tels que les ferrites, et/ou dans le groupe consistant en les composés des terres rares, tels que ceux à base de NdFeB, SmCo.

3. - Procédé selon l'une des revendications 1 ou 2, dans lequel, dans ladite étape a), l'hydrogénation est effectuée à une température de 20 à 50°C et à une pression égale ou supérieure à la pression ambiante ; et dans lequel lesdites particules magnétiquement inertes obtenues ont une taille dans la plage de 1 micron à 2 000 microns.

4. - Procédé selon l'une quelconque des revendications précédentes, dans lequel, dans ladite étape c), le broyage cryogénique est effectué à -l96°C, et dans lequel la taille des particules obtenues est de 50 - 1 000 nm.

5. - Procédé selon l'une quelconque des revendications précédentes, dans lequel, dans ladite étape de dégazage d), le traitement thermique de la poudre magnétiquement inerte obtenue à l'étape c) est effectué sous un vide, à une pression ≤ 1 mbar et à une température ≥ 700 °C.

6. - Procédé selon l'une quelconque des revendications précédentes, dans lequel ladite étape a) est précédée d'une étape de présélection des composants contenant des matériaux ferromagnétiques, une telle présélection étant effectuée soit manuellement, soit mécaniquement, pour procéder au retrait des composants qui ne sont manifestement pas ferromagnétiques.

7. - Procédé selon l'une quelconque des revendications précédentes, dans lequel les poudres de composés ferromagnétiques de valeur séparées au cours de l'étape e), ayant un degré de pureté au moins supérieur à 90% en poids, sont scellées dans des conteneurs pour le stockage ou pour une réutilisation immédiate.
